# EUROPEAN PATENT APPLICATION

(11) **EP 2 436 718 A2**
(43) Date of publication of application: **04.04.2012**
(21) Application number: 11182401.7
(22) Date of filing: 22.09.2011
(51) Int. Cl.: C08G 73/10, C07C 255/53

(54) **Polyetherimide resins useful for high temperature applications, and related processes**

(30) Priority: 30.09.2010 US 924666
(71) Applicant: General Electric Company, Schenectady, NY 12345 (US)
(72) Inventor: Shafer, Sheldon Jay, Niskayuna, NY New York 12309 (US)
(74) Representative: Szary, Anne Catherine

(57) **Abstract**

A polyetherimide resin is described herein. The resin includes a structure of repeating units of the formula (**I**) 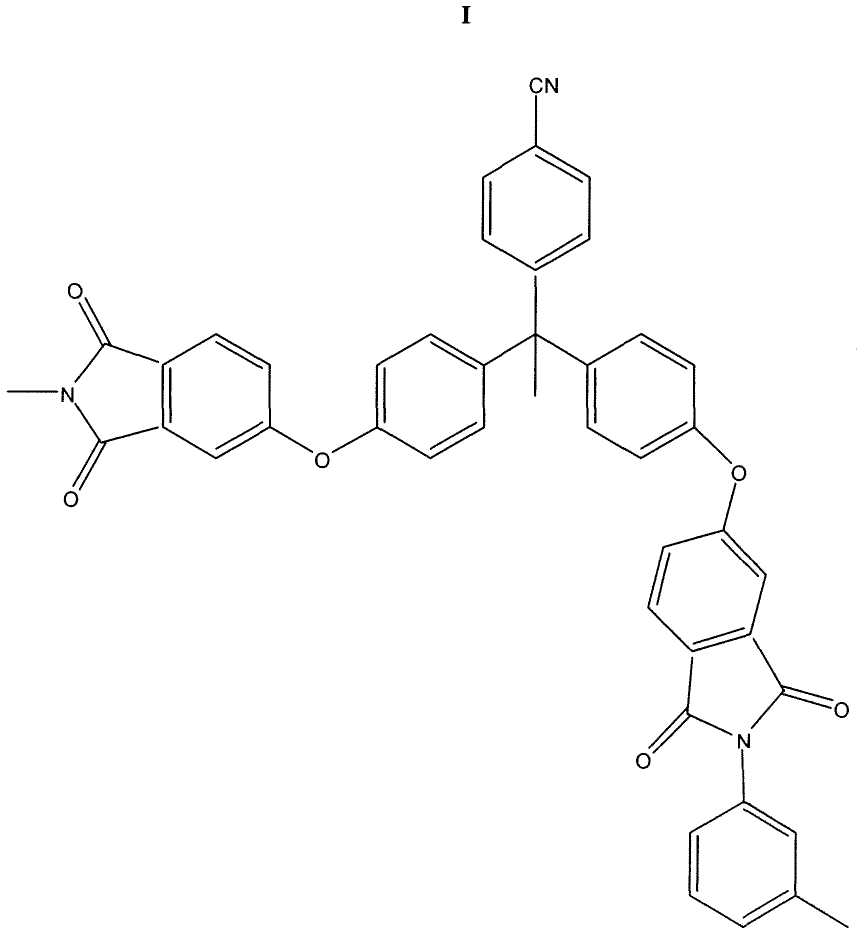 ,wherein each aromatic ring in the structure can be substituted with at least one halogen atom, nitro group, cyano group, alkyl group, cycloalkyl group, or aryl group. Another embodiment relates to a method for preparing a polyetherimide polymer. The method includes the step of reacting metaphenylenediamine bis(4-nitrophthalimide) with a bisphenolic mixture of a salt of bisphenol A and a salt of an arylcyano-modified bisphenol.

## Description

### BACKGROUND OF THE INVENTION

This invention relates generally to polyetherimides. More specifically, the invention relates to new polyetherimide resins that are useful in forming components for various high-temperature articles, and components within articles. The invention also relates to methods for making such resins.

Polyetherimides are a known class of high performance polymers that are very useful for high temperature environments. (They are often thought of as a family of materials within the broad class of "polyimides"). Some of the polyetherimide resins are sold under the trade name ULTEM® (Saudi Basic Industries Corp.). The polyetherimide materials are usually characterized by high heat resistance, solvent resistance, and flame resistance. They also can exhibit high dielectric strength, along with high energy density, and good mechanical properties. These properties make the polymers very attractive for a number of end uses, such as medical and chemical instrumentation, as well as many automobile and aviation applications - both decorative and protective. Moreover, the polyetherimide resins can be used for high-temperature electrical insulation, as coil and cable wrappings; and as components for electrical equipment, such as transformers and capacitors.

Some of the end use applications continue to require polymeric components with even higher physical, chemical, and electrical properties. As an example, some of the electrical devices require materials that can withstand operating temperatures greater than about 200°C. Moreover, the applications may require a combination of high dielectric constant values and high breakdown strength properties which do not always rise in concert.

Thus, new polyetherimide resins with an increased property profile would be welcome in the art. In many cases, the materials should have relatively high dielectric constant values and breakdown strength characteristics. They should also be capable of operating at high temperatures, e.g., above 200°C, and should be robust enough (e.g., film strength and flexibility) to perform adequately within devices exposed to challenging environments. It would also be ideal if the polymeric materials upon which device components are based could be formed by economical techniques which enhance the overall manufacturing process for devices and other articles.

### BRIEF DESCRIPTION OF THE INVENTION

One embodiment of this invention is directed to a polyetherimide resin comprising a structure of repeating units of the formula (I) 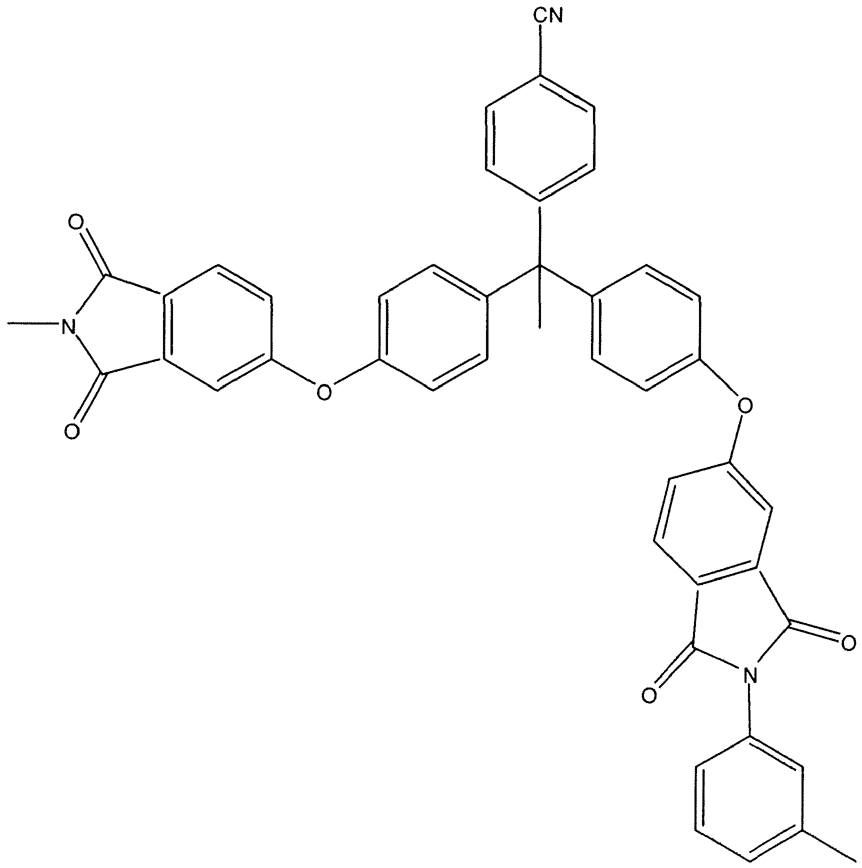 wherein each aromatic ring in the structure can be substituted with at least one halogen atom, nitro group, cyano group, alkyl group, cycloalkyl group, or aryl group.

In another embodiment the polyetherimide has the formula

[A]ₘ [B]₁₋ₘ,

where A has the structure "A" 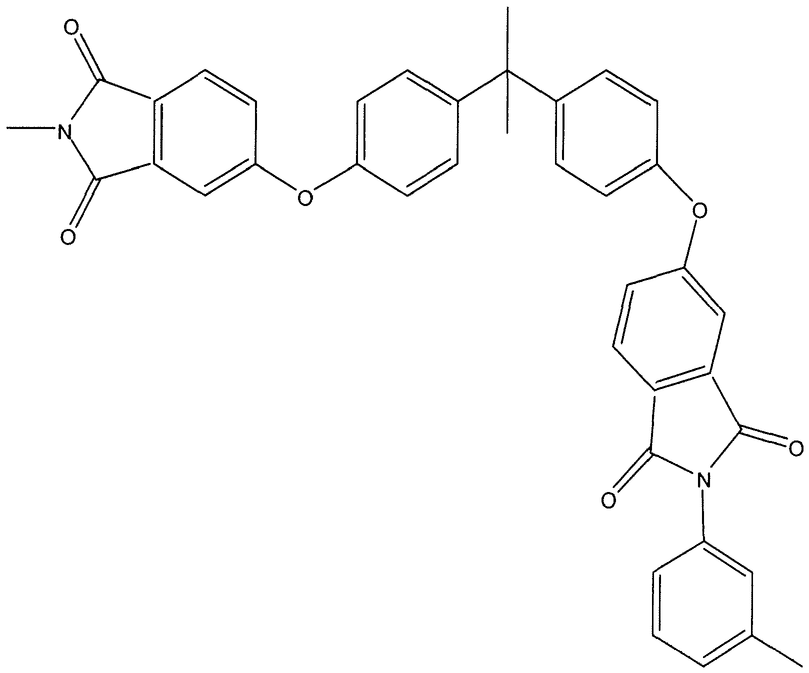 and B has the structure "B" 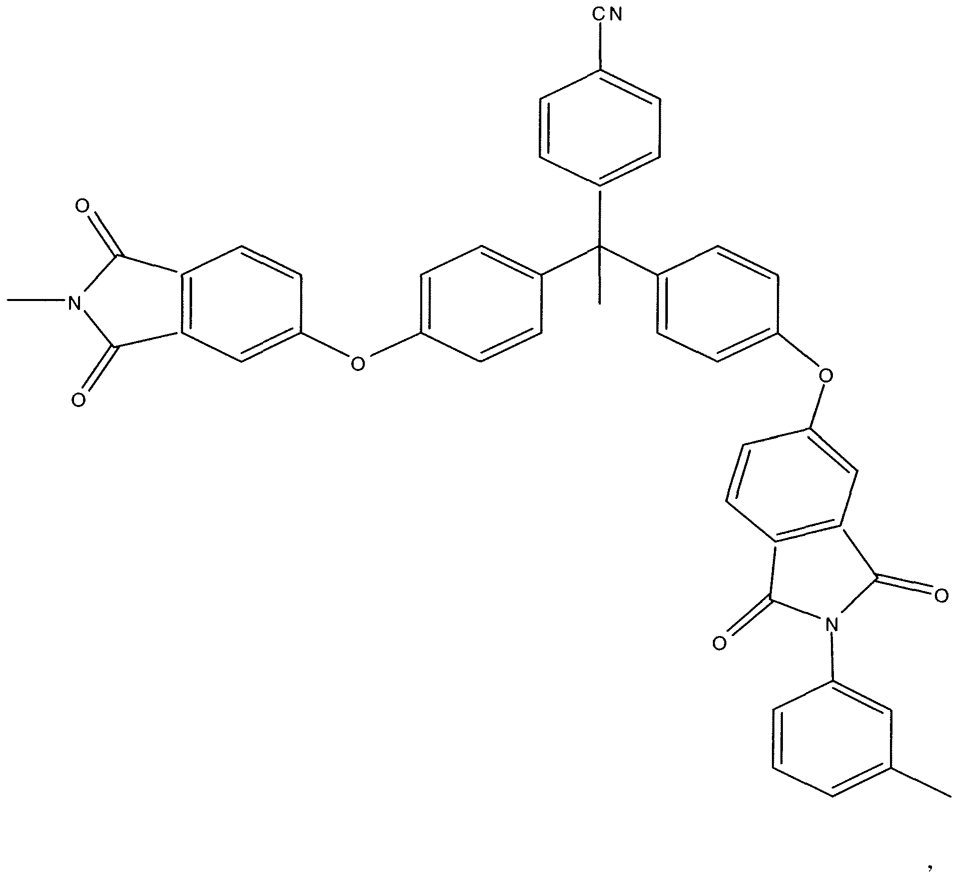 wherein each aromatic ring in structures A and B can be substituted with at least one halogen atom, nitro group, cyano group, alkyl group, cycloalkyl group, or aryl group.

Another embodiment of the invention embraces a method for preparing a polyetherimide polymer, comprising the step of reacting metaphenylenediamine bis(4-nitrophthalimide) with a bisphenolic mixture of a salt of bisphenol A and a salt of an arylcyano bisphenol having structure II 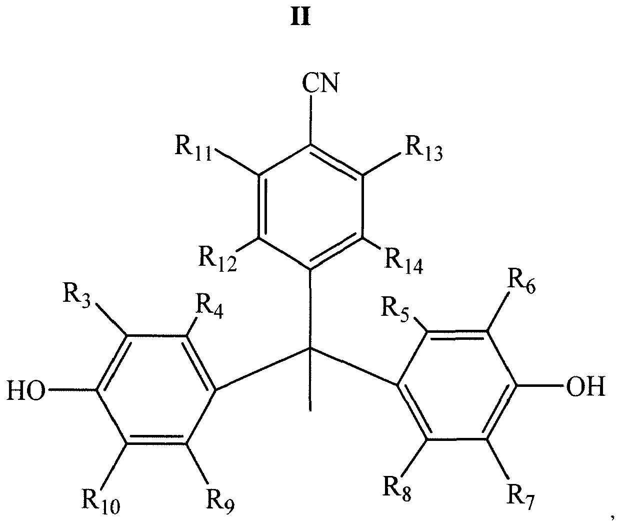 in the presence of at least one polar aprotic solvent, at a temperature in the range of about 60°C to about 110°C;
wherein, for structure II, R₃ -R₁₀ are independently a hydrogen atom, halogen atom, nitro group, cyano group, C₁-C₂₀ alkyl radical, C₄-C₂₀ cycloalkyl radical, or C₄-C₂₀ aryl radical; R₁₁ -R₁₄ are each independently a hydrogen atom, C₁-C₂₀ alkyl radical, C₄-C₂₀ cycloalkyl radical, or C₄-C₂₀ aryl radical; or R₁₁ and R₁₂ together form a C₄-C₂₀ cycloaliphatic ring which is optionally substituted by one or more C₁-C₂₀ alkyl, C₆-C₂₀ aryl, C₅.C₂₀, aralkyl, C₅-C₂₀cycloalkyl groups or a combination thereof.

### DETAILED DESCRIPTION OF THE INVENTION

The numerical ranges disclosed herein are inclusive and combinable (e.g., ranges of "up to about 25 wt%", or, more specifically, "about 5 wt% to about 20 wt%", are inclusive of the endpoints and all intermediate values of the ranges). In terms of any compositional ranges, weight levels are provided on the basis of the weight of the entire composition, unless otherwise specified; and ratios are also provided on a weight basis. Moreover, the term "combination" is inclusive of blends, mixtures, alloys, reaction products, and the like.

Approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

In the following specification and claims, the singular forms "a", "an" and "the" include plural referents unless the context clearly dictates otherwise. As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur.

For the present invention, the polyetherimide resin (i.e., polyetherimide polymer) comprises a structure of repeating units of the formula (**I**)

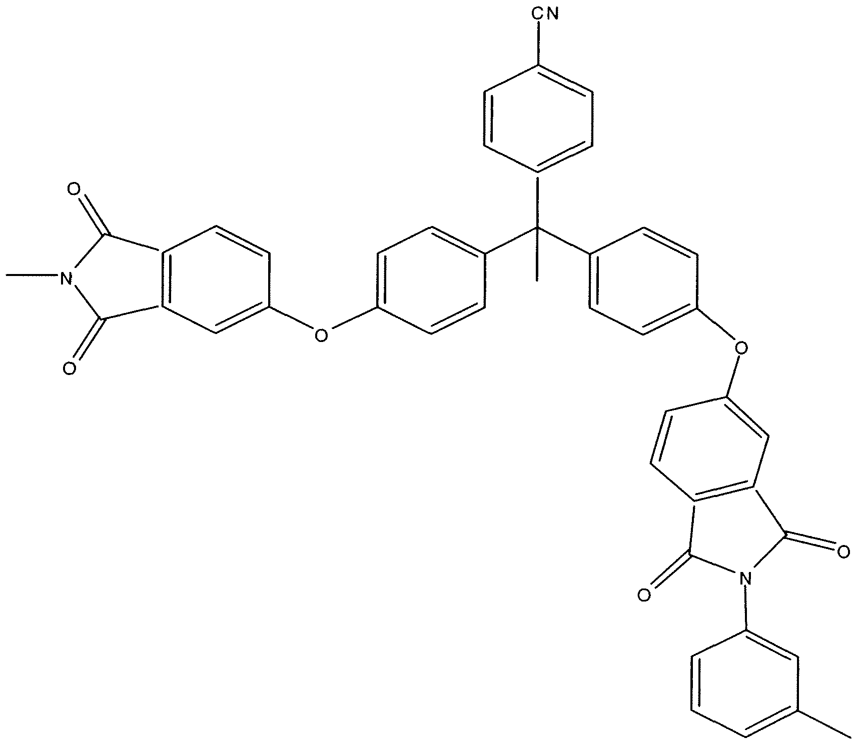

In formula I, each aromatic ring in the structure can (independently) be substituted with a variety of groups, or single atoms. Non-limiting examples include halogen atoms (e.g., fluorine, chlorine, or bromine); nitro groups, cyano groups, alkyl groups, cycloalkyl groups, or aryl groups. As described herein, and in co-pending Application S.N. 12/895,416 (Docket 241840-1), the presence of this aryl-cyano polyetherimide structural unit, in conjunction with other polyetherimide attributes, can result in polymer systems that are attractive for a variety of end uses.

As further described below, the cyano (CN)-phenyl-terminating bisphenol structure of the resin (designated for simplicity as substructure "x" in Formula I can be prepared from a monomer salt of structure (**II**)

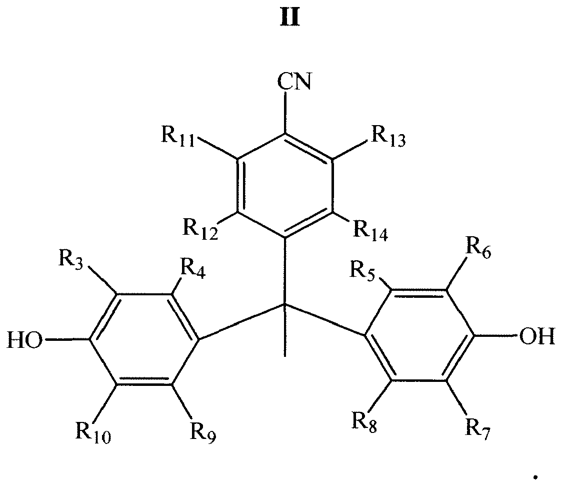

In the case of structure **II**, a variety of groups or atoms can be attached to the phenyl groups, and many were mentioned previously. Thus, groups R₃ -R₁₀ can independently be a hydrogen atom, halogen atom, nitro group, cyano group, C₁-C₂₀ alkyl radical C₄-C₂₀ cycloalkyl radical, or C₄-C₂₀ aryl radical; and R₁₁ -R₁₄ can each independently be a hydrogen atom, C₁-C₂₀ alkyl radical, C₄-C₂₀ cycloalkyl radical, or C₄-C₂₀ aryl radical. In some embodiments, R₁₁ and R₁₂ together can form a C₄-C₂₀ cycloaliphatic ring. That ring can optionally be substituted by one or more C₁-C₂₀ alkyl, C₆-C₂₀ aryl, C₅.C₂₀, aralkyl, C₅-C₂₀ cycloalkyl groups, or a combination thereof. While the cyano (CN)-phenyl-terminating bisphenol structure or unit is highlighted above, the overall resin can be thought of as a polymer (technically, a copolymer), having the formula

[**A**]ₘ [**B**]₁₋ₘ,

In the formula, A has the structure 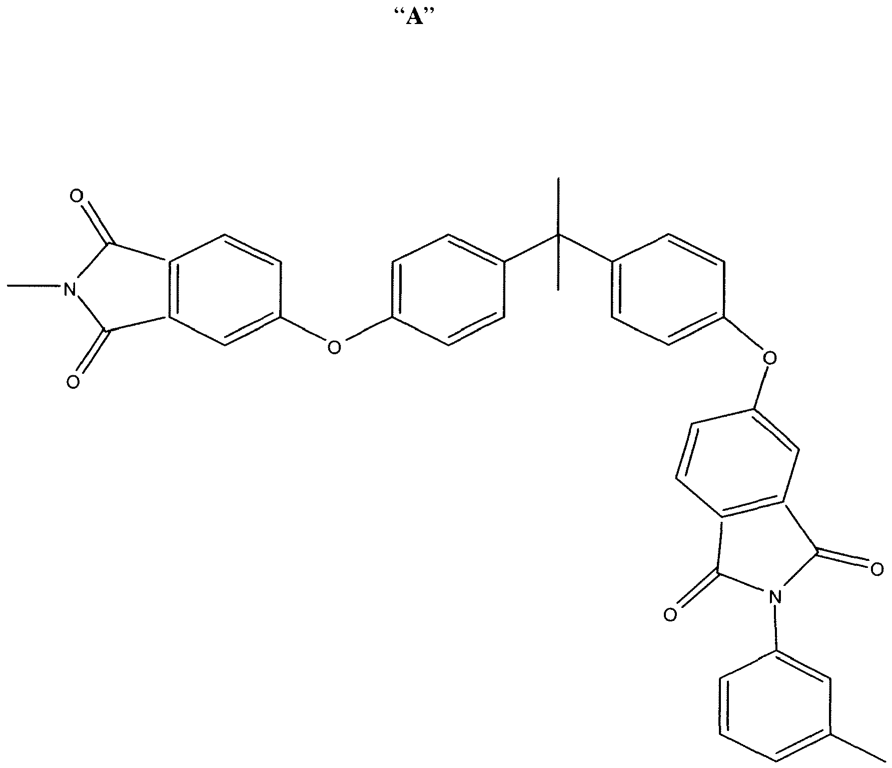 and B has the structure

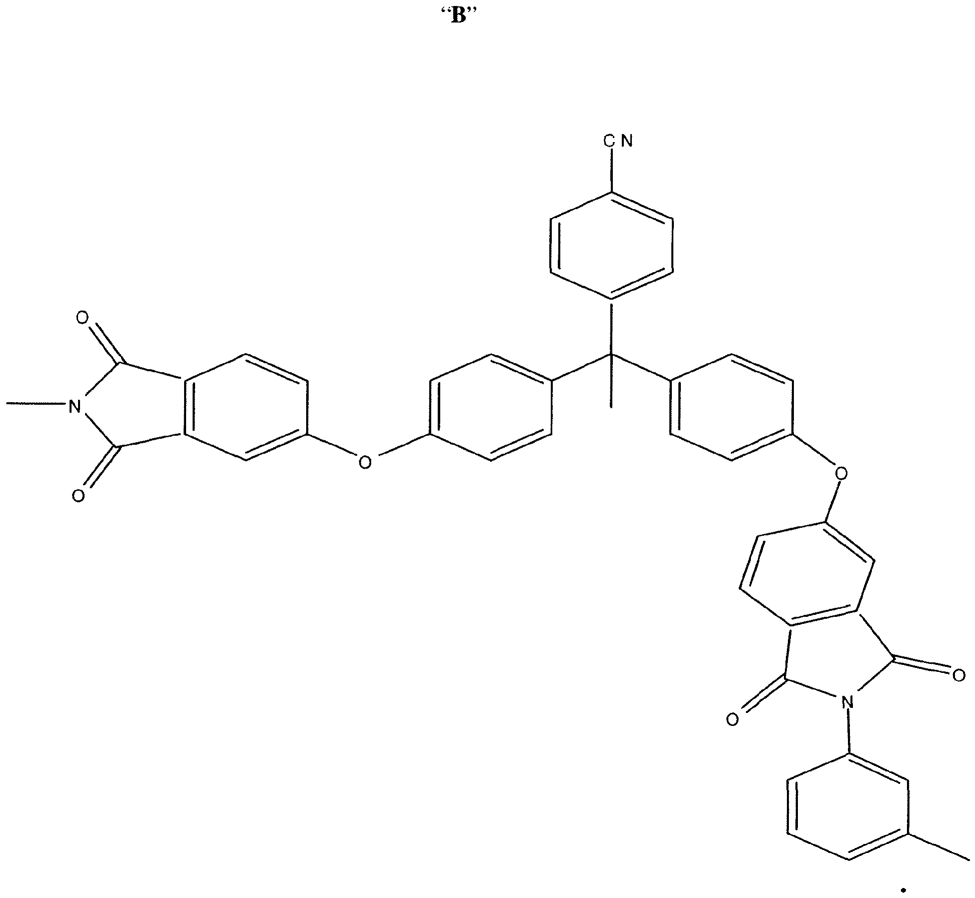

For each of the formulae "A" and "B", some or all of the aromatic rings can be substituted with at least one halogen atom, nitro group, cyano group, alkyl group, cycloalkyl group, or aryl group.

As described below, the key distinction between the two structures relates to the selected bisphenol. Moreover, for each of the formulae "A" and "B", some or all of the aromatic rings can be substituted with at least one halogen atom, nitro group, cyano group, alkyl group, cycloalkyl group, or aryl group.

The relative proportions of structure A and structure B (i.e., Bisphenol A-derived material to arylcyano bisphenol-derived material) may vary considerably. Some of the factors which influence the selection of the proportions include desired levels of tensile strength, ductility (e.g., as shown by increased impact strength and/or increased tensile elongation-to-break),dielectric constant values, dissipation loss values, energy density, specific polyetherimide identity, and the end use of the resin. In some instances, an increase in the arylcyano content can increase the Tg values, the energy density, and the dielectric constant; but will also increase the dissipation loss factor. Moreover, the dielectric constant may begin to level off or decrease as the arylcyano content is increased to higher levels, e.g., greater than about 50%, as a percentage of the total bisphenol-derived content.

The proportion of the Bisphenol A-derived material to the arylcyano bisphenol-derived material can be expressed in terms of the final polymer content. Thus, in some embodiments, the polyetherimide resin comprises at least about 10% of structure B above, based on the total polymeric content of structures A and B. In some specific embodiments, the resin comprises no greater than about 50% of structure B, and preferably, no greater than about 40% of structure B. For some of the end uses related to electronic devices such as capacitors, the polyetherimide resin will comprise about 20% to about 30% of structure B.

The molecular weight of the polyetherimide can be adjusted to some degree, and will depend on many of the factors listed above. In some instances, the molecular weight (weight average) is in the range of about 35,000 to about 100,000. In more specific embodiments, the range is about 40,000 to about 70,000, although the most suitable range will be tailored to a particular end use.

As also alluded to previously, the tensile strength of the polyetherimide resin can also be adjusted, e.g., by adjustment of the monomer proportions. For a polyetherimide film having a thickness of about 1 micron to about 100 microns, the tensile strength (e.g.., via ASTM D-638 standards) is often greater than about 5,000 psi, and in some cases, greater than about 15,000 psi.

In some embodiments, the glass transition temperature (Tg) of the polyetherimide resin is greater than about 200°C. For high temperature applications, the Tg may be greater than about 220°C, and in some cases, greater than about 250°C. As mentioned above, the polyetherimide material described herein is designed to provide the desired balance between mechanical properties such as tensile strength, thermal properties such as the Tg, and the other properties for a particular end use, e.g., the various electrical properties.

As mentioned above, another embodiment of this invention is directed to a method for preparing a polyetherimide polymer. In some preferred embodiments, the method comprises the step of reacting a bisphenolic mixture of a salt of bisphenol A and a salt of an arylcyano bisphenol having structure II (as shown above), with metaphenylenediamine bis(4-nitrophthalimide), structure III

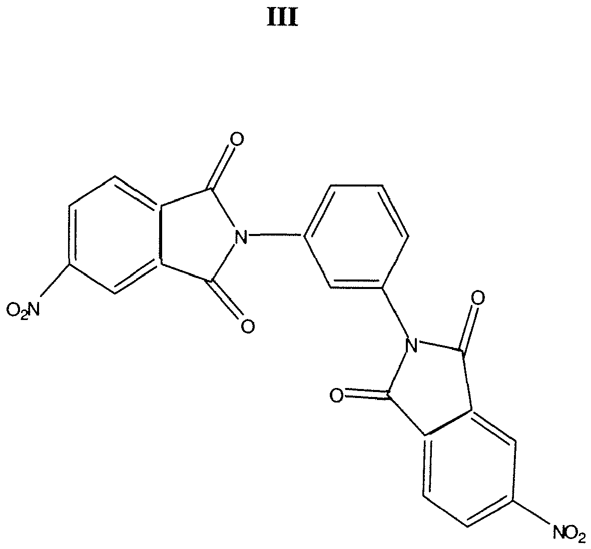

For simplicity, this compound is sometimes referred to herein as the "nitrophthalimide compound", and in some cases, "Nitro PAMI".

General methods for making the salts of each of the bisphenol compounds are known in the art. For example, U.S. Patent 5,068,353 (Dellacoletta) describes techniques for the formation of diphenoxide salts from the corresponding dihydric phenol compounds. (This patent is incorporated herein by reference). The bisphenol can be reacted with a variety of other bases, such as sodium methoxide, sodium ethoxide, and the analogous potassium or lithium salts.

In regard to the intermediate compound, metaphenylenediamine bis(4-nitrophthalimide) can be prepared by various techniques. Frequently, a suitable nitro-substituted phthalic anhydride compound is reacted with at least one diamine. The preferred compound is selected from the group consisting of 4-nitrophthalic anhydride, 3-nitrophthalic anhydride; and mixtures thereof. In some instances, the mixture can comprise at least about 75% of 4-nitrophthalic anhydride.

A wide variety of diamines may be employed, and many of them are described in U.S. Patent 3,983,093 (Williams, III, et al), which is incorporated herein by reference. As described in the Williams patent, many of the suitable diamines conform to structure IV, below

H₂N-R-NH₂ (**IV**),

wherein "R" can be selected from various aromatic hydrocarbon radicals (and halogenated derivatives thereof); alkylene radicals, cycloalkylene radicals; alkylene terminated polydiorganosiloxanes; and other types of divalent radicals described in the Williams patent.

Non-limiting examples of the diamines include m-phenylenediamine; p-phenylenediamine; 4,4'-diaminodiphenylpropane; 4,4'-diaminodiphenylmethane; benzidine; 4,4'-diaminodiphenyl sulfide; 4,4'-diaminodiphenyl sulfone; 4,4'-diaminodiphenyl ether; 1,5-diaminonaphthalene; 2,4-bis(.beta.-amino-t-butyl)toluene; 1,3-diamino-4-isopropylbenzene; m-xylylenediamine; 2,4-diaminotoluene; bis(4-aminocyclohexyl)methane; bis(3-aminopropyl)sulfide; bis(3-aminopropyl)tetramethyldisiloxane; and various mixtures of diamines. In some preferred embodiments, the diamine is selected from m-phenylenediamine, p-phenylenediamine, or mixtures thereof.

The reaction to form the metaphenylenediamine bis(4-nitrophthalimide) can be advantageously carried out as a melt-reaction employing well known, higher-boiling inert solvents, such as o-dichlorobenzene and xylene. Reaction temperatures can vary, but are usually in the range of about 150°C to about 180°C. Water is usually distilled from the reaction system, and the resulting metaphenylenediamine bis(4-nitrophthalimide) product is insoluble in the reaction solvent. After filtration, it can be recovered as a solid, washed, and dried.

In some embodiments for preparing the polyetherimide polymer, the bisphenolic salts (washed and filtered) are first combined in a suitable vessel. The solvent system for the reaction with the nitrophthalimide compound (III) usually comprises a polar aprotic solvent and at least one aromatic solvent. (Polar aprotic solvents are often required for the nitro-displacement chemistry which characterizes the reaction described herein, as well as for other polyetherimide processes. The aromatic solvents are helpful in the removal of any moisture in the starting products or reaction system, by way of the azeotroping phenomenon mentioned in the examples which follow).

Examples of suitable polar aprotic solvents include dimethylformamide (DMF), dimethyl acetamide (DMAC), dimethyl sulfoxide (DMSO), N-methyl pyrrolidone (NMP); and combinations thereof. DMSO is preferred in some embodiments. Examples of the aromatic solvents include benzene, ethylbenzene, xylene, toluene, and combinations thereof. Toluene is sometimes preferred. Those skilled in the art will be able to select the most appropriate solvent system for a given situation, based on the teachings herein.

The combination of the bisphenolic salts within the solvent system is carried out at a reaction temperature which depends in part on the identity and boiling points of the solvents. Usually, the reaction is carried out at a temperature in the range of about 100°C to about 160°C. Typically, the aromatic solvent is distilled out of the reaction vessel during the course of the mixing step. As described in one of the examples which follows, the reaction mixture is then allowed to cool to room temperature, during which time the salts remain completely soluble in the polar aprotic solvent. The cooling step can be very important for preventing premature reaction during the addition of the nitrophthalimide component.

The metaphenylenediamine bis(4-nitrophthalimide) component can then be carefully added to the reaction system, with some of the aprotic solvent, within a moisture-free environment. An example of a suitable reaction vessel is a glove box, which can be filled with an inert gas. The relative amount of the bisphenols and the nitrophthalimide compound are determined by the particular composition of the polyetherimide copolymer, for a given end use. The reaction temperature will depend on a number of variables, such as the particular bisphenols used; and the solvent system employed. In most cases, the reaction temperature will be in the range of about 60°C to about 120°C. In some specific embodiments, the reaction temperature will be in the range of about 70°C to about 100°C.

Other details regarding the polymerization reaction are set out in one of the examples. The polymer reaction can take place very rapidly, e.g., less than about 20 minutes for reactants being used at the kilogram level. In this type of reaction, the copolymer product precipitates out of the reaction solution. It can be dissolved in an appropriate solvent, and then filtered to remove impurities. Other details regarding the separation and purification of such a polymer product are known to those skilled in the art. Variations of these procedures, within the general teachings herein, would also be recognized by experienced practitioners. Moreover, it should be noted that the process steps described herein are thought to be more practical, e.g., less laborintensive, than the steps used to prepare some of the prior art compositions. The processes described in the referenced patent to Bender and Takekoshi, U.S. 5,357,033, might serve as a good comparison.

As alluded to previously, the polymeric resins of this invention can be used in many forms, e.g., molded parts, adhesives, coatings, films, or foams. Moreover, they can be filled or unfilled, and may also contain various surfactants, e.g., fluorosurfactants. The properties they exhibit make them very attractive for a number of end uses, such as medical and chemical instrumentation, as well as many automobile and aviation applications, both decorative and protective. Moreover, the polyetherimide resins can be used for high-temperature electrical insulation, as coil and cable wrappings; and as components for electrical equipment, such as transformers and capacitors. Some of the suitable end uses are described in more detail in the above-referenced, co-pending Application S.N. 12/895,416 (Docket 241840-1, Yang Cao et al), which is incorporated herein by reference.

### EXAMPLES

The following examples are presented to further illustrate certain embodiments of the present invention. These examples should not be read to limit the invention in any way.

### Example 1

Four samples were evaluated for various electrical and mechanical properties.

Sample 1 was a commercial polyetherimide resin, Ultem®1000, available from SABIC Innovative Plastics.

Sample 2 was a methyl-cyano-modified polyetherimide resin, prepared by reacting metaphenylenediamine bis(4-nitrophthalimide) with a salt of the methylcyano bisphenol compound set forth below (IV), according to the procedure described farther below for sample 4. The resulting polymer had a molecular weight of 46,000.

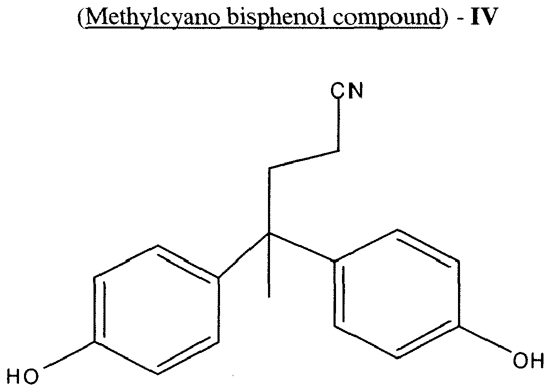

Sample 3 was a modified polyetherimide resin, containing cyano groups. This sample was similar to a material prepared in Example 2 of U.S. Patent 5,357,033 (Bender et al), which is incorporated herein by reference. (The material in the Bender patent is sometimes referred to as a polyetherimide containing "cyanomethyl dipolar groups"). The sample was prepared by reacting metaphenylenediamine bis(4-nitrophthalimide) with a salt of the cyano bisphenol compound illustrated below (V). The resulting polymer had a molecular weight of 42,000.

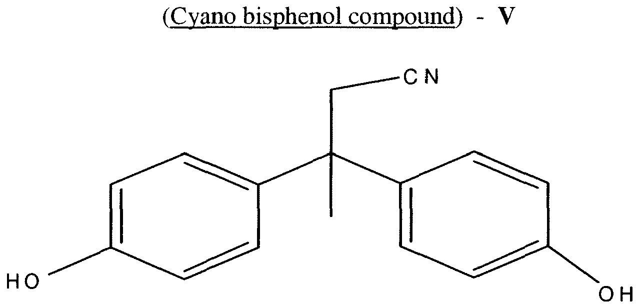

Sample 4 was a modified polyetherimide resin, according to embodiments of the present invention. To a 2 liter 3-neck round bottom flask equipped with a mechanical stirrer in a dry box was weighed 81.702 grams (0.3009 moles of the disodium salt of Bisphenol-A and 35.989 grams (0.10015 moles) of the disodium salt of the arylcyano bisphenol, as indicated below (VI):

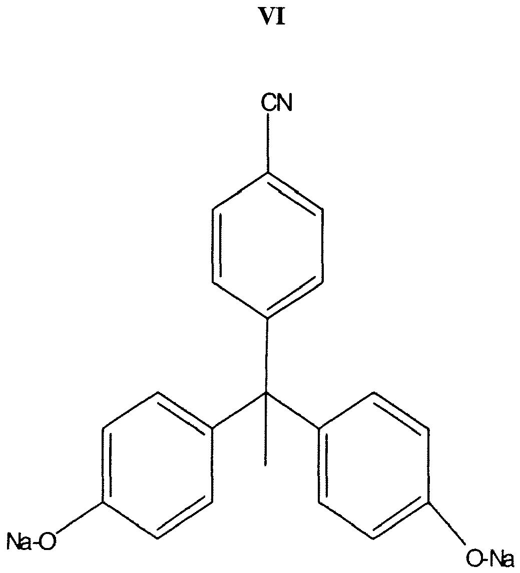

The salts were washed into the vessel with dry dimethyl sulfoxide (DMSO) (Aldrich Sure-seal). A total of 460 ml of DMSO was added. To the vessel was then added 50 ml of dry toluene (dried over 4 angstrom molecular sieves). The reaction vessel was capped and removed from the dry box. The reaction vessel was then placed in an oil bath with the temperature set at 126°C. The reaction vessel was equipped with a nitrogen inlet and a condenser/receiver equipped with a backpressure bubbler. The stirred mixture quickly became a clear solution, and over the course of about four hours, the toluene was distilled out of the vessel.

The temperature for the oil bath was then lowered to 79°C, and the bath was dropped away from the reaction flask, allowing the mixture to cool. The flask was then capped and moved back into the dry box. The vessel was allowed to cool for about 1.5 hours, and all of the salt was still soluble. Bis(4-nitrophthalimide) was then weighed out (183.443 grams, 0.40023 moles). The solid material was carefully transferred to the reaction vessel, and 270 ml of additional dry DMSO was used to rinse the bis(4-nitrophthalimide) into the vessel. The reaction vessel was capped and removed from the dry box. The reaction vessel was then re-immersed in the oil bath, which was now maintained at 79°C. The nitrogen inlet was re-installed, along with the condenser/receiver. The agitator was turned on slowly, with the speed increasing slowly, as the reaction proceeded.

The reaction took place rapidly over the course of 16-18 minutes, with the reaction being terminated when the polymer precipitated as a large, solid chunk. The DMSO solution, which contained some low molecular weight polymer, and most of the byproduct sodium nitrite, was poured out of the vessel. The resulting polymer chunk was then dissolved in chloroform, and quenched with 6.0 ml of acetic acid. The solution was then filtered through a 1.5 micron glass fiber filter, in order to remove traces of occluded sodium nitrite. The polymer was then precipitated into a methanol solution, using a high-speed blender. Its GPC Molecular weight specifications were as follows: Mw - 64,889, Mn - 22,834. Tg - 235 C. Yield - 225 grams.

**Table 1**

| Polymer Sample | Type^{a} | Tg (°C)^{b} | ∈ᵣ^{c} | Df^{d} | Film Strength^{e} |
|---|---|---|---|---|---|
| 1 | Commercial Polyetherimide | 217 | 3.2 | 0.001 | Strong/Flexible |
| 2 | Methyl-Cyano Polyetherimide | 226 | 3.5 | 0.019 | Strong/Flexible |
| 3 | Cyano-Polyethermide | 228 | 4.7 | 0.019 | Strong/Flexible |
| 4 | Aryl-Cyano-Polyetherimide | 236 | 4.7 | 0.005 | Strong/Flexible |

| | | | | | |
|---|---|---|---|---|---|
| (a) Samples 1, 2, 3 are comparative samples; Sample 4 is within the scope of the invention (b) Glass Transition Temperature (ASTM D3418) (c) Dielectric Constant (Relative Permittivity), as measured by ASTM D150-98. (d) Dissipation Loss (Dissipation Factor), as measured by ASTM D150-98. (e) Measured by close visual inspection of the film, after winding it on a 1/8 inch (3.18 mm) core. | | | | | |

As shown in Table 1, all of the samples exhibited an acceptable level of strength and flexibility, with no visual signs of cracking or other degradation. However, Sample 4, based on the material described previously, exhibited a significantly higher Tg value, allowing the material to be used in electronic devices which are used (and/or constructed) at higher temperatures than other devices. Moreover, the lower dissipation loss factor Df for Sample 4 can lead to a higher density value, which is very important for various devices, such as the capacitors described herein.

### Example 2

Samples 5-8 were prepared in the manner described above for sample 4, except that the proportion of the Bisphenol-A and the arylcyano bisphenol (i.e., their respective salts) was varied. After films of the samples (average thickness of about 5-25 microns) were prepared, the properties set out in Table 2 were measured. (Any differences in measured values from those in Example 1 may be due to minor differences in the sample compositions being used; and/or in testing procedures).

**Table 2**

| Polymer Sample | Aryl-Cyano Level^{a} | ∈ᵣ^{b} | Df^{c} | Breakdown Strength^{d} | Tg (^{o}C)^{e} |
|---|---|---|---|---|---|
| 5 | 15 mole % | 4.0 | 0.010 | 394 | >220 |
| 6 | 25 mole % | 4.7 | 0.003 | 745** | >220 |
| 7 | 35 mole % | 3.7 | 0.012 | >280 | >220 |
| 8 | 50 mole % | 4.2 | N/A* | >376 | >220 |

| | | | | | |
|---|---|---|---|---|---|
| (a) Percentage of the aryl-cyano-modified, bisphenol -based monomer; based on the total of that monomer and the Bisphenol A monomer (b) Permittivity, as measured by ASTM D150-98. (c) Dissipation Loss (Dissipation Factor), as measured by ASTM D 150-98. (d) Breakdown Strength, as measured by ASTM D149-09, in kV/mm (e) Glass transition temperature * Not Available ** (Filtered) | | | | | |

The data for samples 5-8 demonstrate some variation in permittivity, dissipation loss, and breakdown strength, when the ratio of the two bisphenol monomers is changed. However, the benefits of using some level of the aryl-cyano monomer is apparent in all instances. In some embodiments, the use of about 25 mole% of the aryl-cyano monomer, or a range surrounding 25 mole%, is preferred.

While only certain features of the invention have been illustrated and described herein, many modifications and changes will occur to those skilled in the art. It is, therefore, to be understood that the appended claims are intended to cover all such modifications and changes as fall within the true scope of the invention.

## Claims

1. A polyetherimide resin comprising a structure of repeating units of the formula (I) 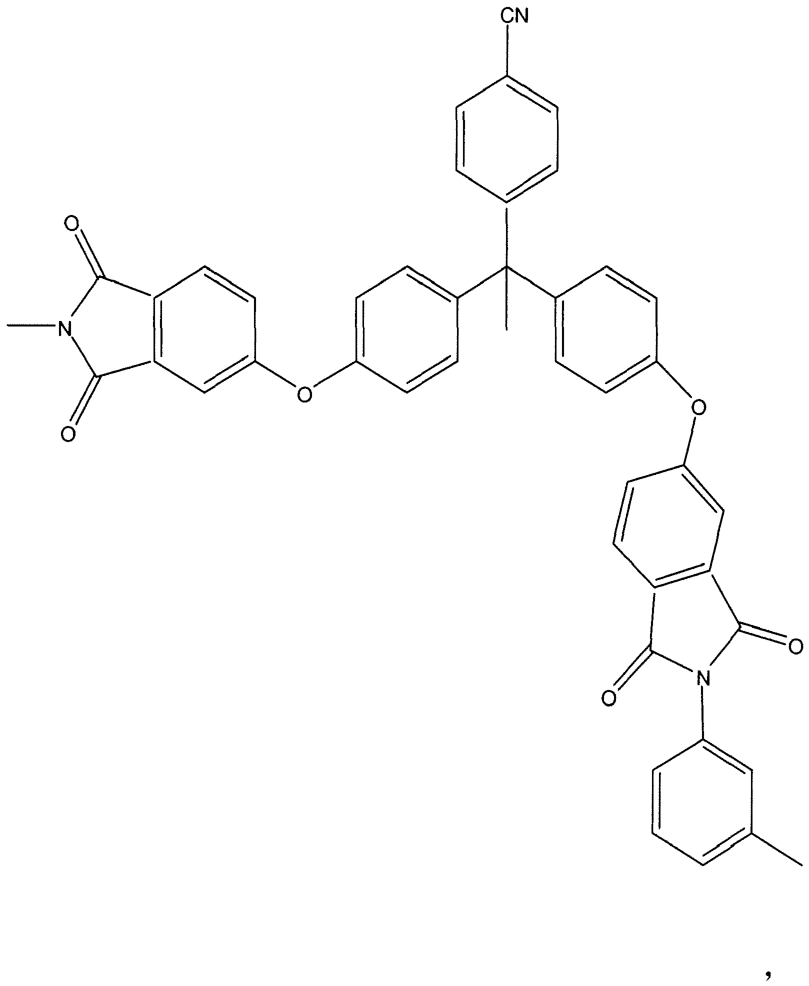 wherein each aromatic ring in the structure can be substituted with at least one halogen atom, nitro group, cyano group, alkyl group, cycloalkyl group, or aryl group.

2. The polyetherimide resin of claim 1, wherein the cyano (CN)-phenyl-terminating bisphenol structure is derived from a monomer comprising structure (II) 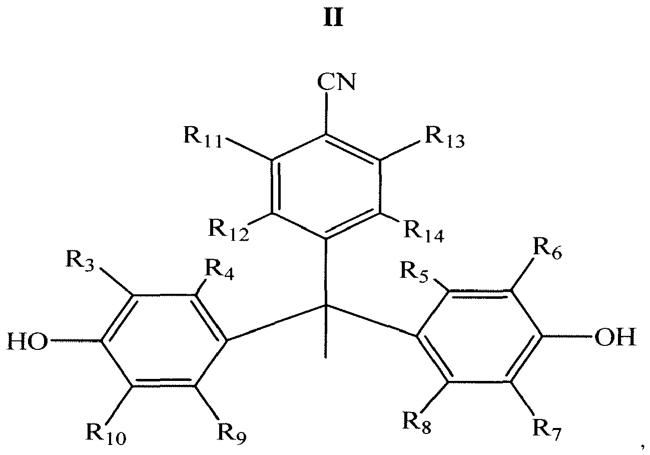 wherein R₃ -R₁₀ are independently a hydrogen atom, halogen atom, nitro group, cyano group, C₁-C₂₀ alkyl radical C₄-C₂₀ cycloalkyl radical, or C₄-C₂₀ aryl radical; R₁₁ -R₁₄ are each independently a hydrogen atom, C₁-C₂₀ alkyl radical, C₄-C₂₀ cycloalkyl radical, or C₄-C₂₀ aryl radical; or R₁₁ and R₁₂ together form a C₄-C₂₀ cycloaliphatic ring which is optionally substituted by one or more C₁-C₂₀ alkyl, C₆-C₂₀ aryl, C₅.C₂₀, aralkyl, C₅-C₂₀cycloalkyl groups or a combination thereof.

3. The polyetherimide resin of claim 2, wherein R₃-R₁₄ of structure (II) are hydrogen.

4. The polyetherimide resin of claim 2 or claim 3, having a glass transition temperature (Tg) of greater than about 220°C.

5. The polyetherimide resin of any preceding claim, having a breakdown strength of at least about 500 kV/mm, and a dielectric constant of greater than about 3.

6. A polyetherimide having the formula
[A]ₘ [B]₁₋ₘ,
where A has the structure 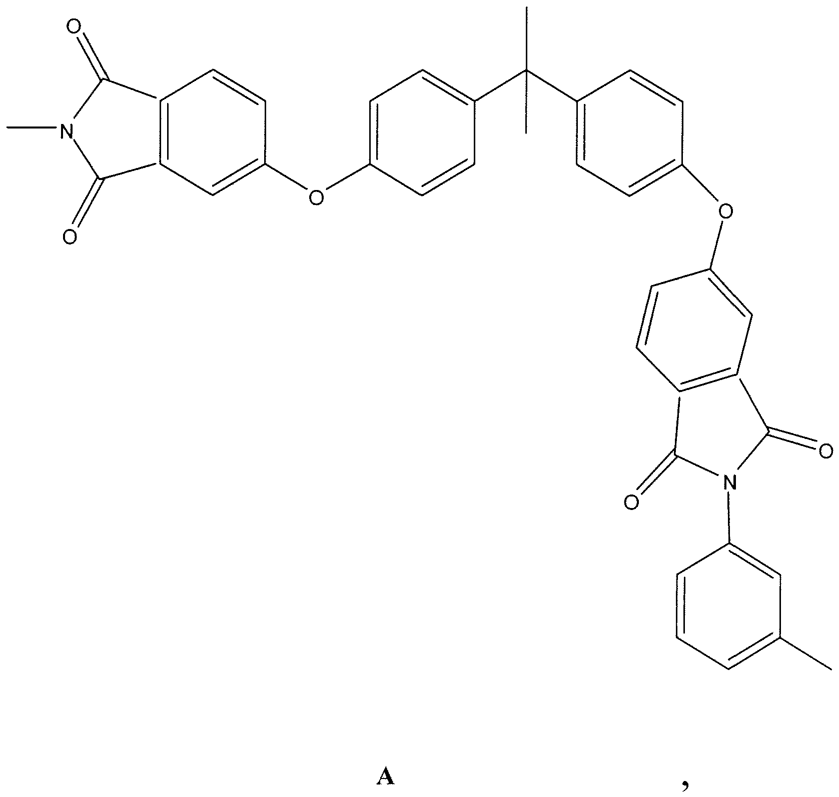 and B has the structure 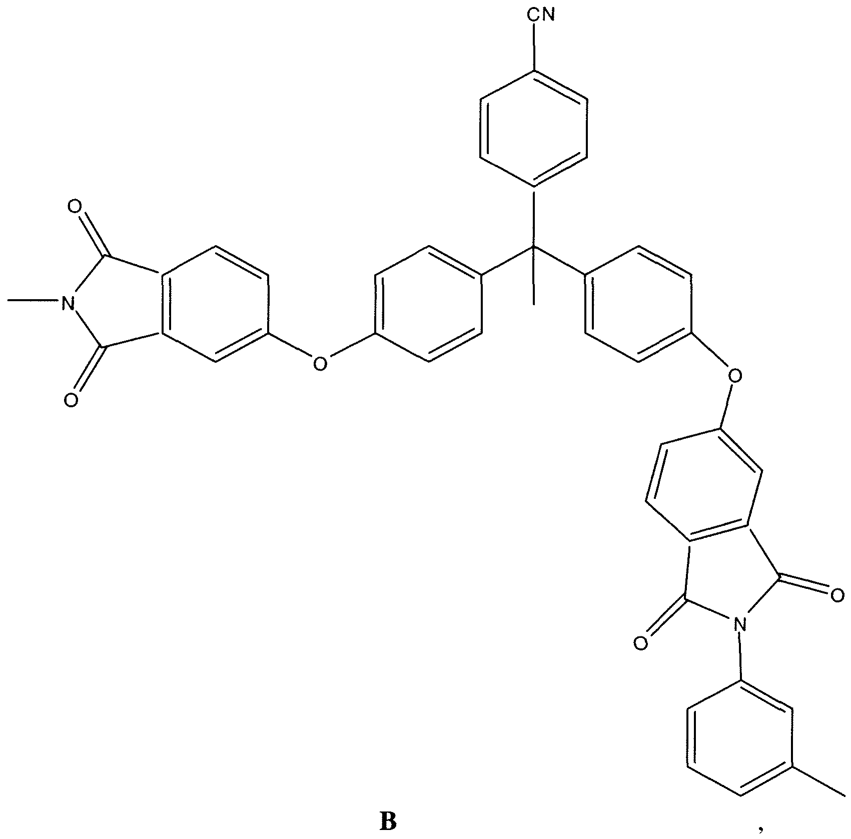 wherein each aromatic ring in structures A and B can be substituted with at least one halogen atom, nitro group, cyano group, alkyl group, cycloalkyl group, or aryl group.

7. The polyetherimide of claim 6, comprising at least about 15% of structure B, based on the total polymeric content of structures A and B.

8. The polyetherimide of claim 7, comprising about 20% to about 30% of structure B.

9. The polyetherimide of any one of claims 6 to 8, wherein structure A comprises Bisphenol A structural units, and structure B comprises arylcyano bisphenol structural units.

10. The polyetherimide of any one of claims 6 to 9, having a molecular weight (weight average) in the range of about 35,000 to about 100,000.

11. The polyetherimide of any one of claims 6 to 10, in the shape of a film having a thickness in the range of about 0.05 micron to about 20 microns, wherein the film has a tensile strength of greater than about 5,000 psi; and a glass transition temperature (Tg) of greater than about 220°C.

12. A method for preparing a polyetherimide polymer, comprising the step of reacting metaphenylenediamine bis(4-nitrophthalimide) with a bisphenolic mixture of a salt of bisphenol A and a salt of an arylcyano bisphenol having structure **II** 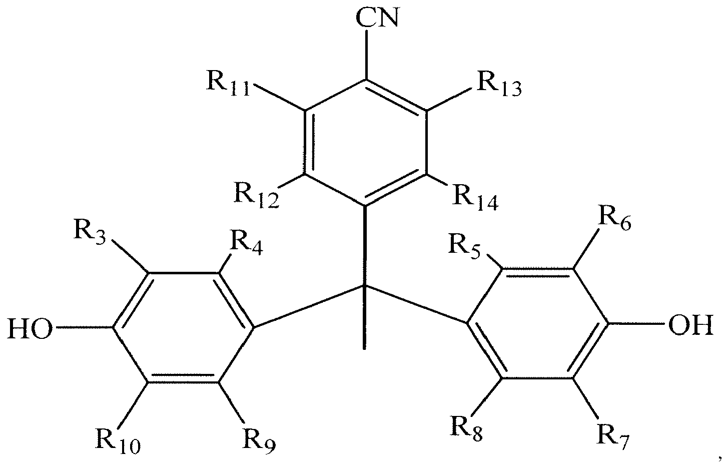 in the presence of at least one polar aprotic solvent, at a temperature in the range of about 60°C to about 120°C;
wherein, for structure II, R₃ -R₁₀ are independently a hydrogen atom, halogen atom, nitro group, cyano group, C₁-C₂₀ alkyl radical C₄-C₂₀ cycloalkyl radical, or C₄-C₂₀ aryl radical; R₁₁ -R₁₄ are each independently a hydrogen atom, C₁-C₂₀ alkyl radical, C₄-C₂₀ cycloalkyl radical, or C₄-C₂₀ aryl radical; or R₁₁ and R₁₂ together form a C₄-C₂₀ cycloaliphatic ring which is optionally substituted by one or more C₁-C₂₀ alkyl, C₆-C₂₀ aryl, C₅.C₂₀, aralkyl, C₅-C₂₀cycloalkyl groups or a combination thereof.

13. The method of claim 12, wherein the reaction is carried out in a solvent system which comprises the polar aprotic solvent and at least one aromatic solvent.

14. The method of claim 12 or claim 13, wherein the polar aprotic solvent is selected from the group consisting of, dimethylformamide (DMF), dimethyl acetamide (DMAC), dimethyl sulfoxide (DMSO), N-methyl pyrrolidone (NMP), and combinations thereof.

15. The method of claim 13 or claim 14, wherein the aromatic solvent is selected from the group consisting of benzene, ethylbenzene, xylene, toluene, and combinations thereof.

16. The method of any one of claims 12 to 15, wherein the metaphenylenediamine bis(4-nitrophthalimide) is added to the bisphenolic mixture within a moisture-free environment.

17. The method of any one of claims 12 to 16, wherein the metaphenylenediamine bis(4-nitrophthalimide) is prepared by the reaction of a nitro-substituted phthalic anhydride with at least one diamine.

18. The method of claim 17, wherein the nitro-substituted phthalic anhydride is 4-nitrophahalic anhydride; and the diamine is meta-phenylene diamine.
